# FASCICULE DE BREVET EUROPEEN

(11) **EP 2 705 223 B1**
(45) Date de publication et mention de la délivrance du brevet: **01.05.2019**
(21) Numéro de dépôt: 12725107.2
(22) Date de dépôt: 04.05.2012
(51) Int. Cl.: F01D 21/08, F01D 11/00, F01D 11/02

(54) **DISPOSITIF D'ÉTANCHÉITÉ POUR DISTRIBUTEUR DE TURBINE DE TURBOMACHINE**
VORRICHTUNG ZUM ABDICHTEN EINES STRÖMUNGSKANALS VON EINER TURBINE EINER STRÖMUNGSMASCHINE
SEALING APPARATUS OF A GUIDE CONDUIT OF A TURBINE OF A TURBOMACHINE

(30) Priorité: 04.05.2011 FR 1153837
(43) Date de publication de la demande: 12.03.2014
(73) Titulaire: Safran Aircraft Engines, 75015 Paris (FR)
(72) Inventeur: LUNEAU, Florent Pierre, Antoine, 77550 Moissy Cramayel Cedex (FR); GIRARD, Patrick, Joseph, Marie, 77550 Moissy Cramayel Cedex (FR); PRESTEL, Sébastien, Jean, Laurent, 77550 Moissy Cramayel Cedex (FR); SOUPIZON, Jean-Luc, 77550 Moissy Cramayel Cedex (FR)
(74) Mandataire: Gevers & Orès
(86) Numéro de dépôt international: PCT/FR2012/051003
(87) Numéro de publication internationale: WO 2012/150424

(56) Documents cités:
- EP-A2- 1 895 108
- EP-A2- 2 233 699
- EP-A2- 2 239 422
- DE-A1-102004 033 924

## Description

La présente invention concerne le domaine des turbomachines telles qu'un turboréacteur ou un turbopropulseur d'avion, et plus particulièrement un dispositif d'étanchéité pour une turbine d'une telle turbomachine.

Une telle turbomachine à soufflante avant et à double corps, par exemple, comprend, d'amont en aval, une soufflante, un compresseur basse pression, un compresseur haute pression, une chambre de combustion, une turbine haute pression et une turbine basse pression.

Par convention, dans la présente demande, les termes « amont » et « aval » sont définis par rapport au sens de circulation de l'air dans le turboréacteur. De même, par convention dans la présente demande, les termes « intérieur » et « extérieur », « inférieur » et « supérieur » et « interne » et « externe » sont définis radialement par rapport à l'axe du moteur. Ainsi, un cylindre s'étendant selon l'axe du moteur comporte une face intérieure tournée vers l'axe du moteur et une surface extérieure, opposée à sa surface intérieure.

Une turbine basse pression de turbomachine comprend un arbre de turbine sur lequel sont montés plusieurs étages successifs comportant chacun une roue à aubes et un distributeur. Chaque roue à aubes comprend un disque portant à sa périphérie externe des aubes sensiblement radiales, les disques des différentes roues étant reliés coaxialement les uns aux autres et à l'arbre d'entraînement du rotor de la turbine par des moyens appropriés. Chaque distributeur comprend une plate-forme annulaire interne et une plate-forme annulaire externe entre lesquelles s'étendent des pales sensiblement radiales. La plate-forme externe du distributeur comprend des moyens d'accrochage et de fixation sur un carter externe de la turbine. L'ensemble des distributeurs forme la partie fixe du moteur appelée stator.

La plate-forme interne comprend une paroi s'étendant radialement vers l'intérieur de la turbine et une couronne annulaire reliée à la paroi. La paroi et la couronne annulaire définissent ainsi une cavité amont et une cavité aval entre le distributeur de turbine et le rotor de turbine. La couronne, la paroi radiale et la plate-forme interne du distributeur sont généralement formées d'une seule pièce de fonderie.

En fonctionnement, les pales du distributeur sont exposées aux gaz chauds s'écoulant dans la veine de la turbine. La température des gaz dans la veine est relativement élevée, typiquement de l'ordre de 900 degrés Celsius, tandis que la température dans la zone comprise entre la plate-forme interne du distributeur et le rotor est plus faible et par exemple d'environ 700 degrés Celsius.

Afin de consolider cette différence de température entre la veine et la cavité, ce qui revient à limiter les recirculations d'air, on connaît un rotor de turbine comprenant un becquet amont définissant une chicane d'étanchéité dans la cavité amont définie par la paroi et la couronne annulaire de façon à former un joint d'étanchéité du type à effet chicane.

Afin de garantir une étanchéité permettant d'éviter un échauffement des disques du rotor, qui engendrerait un risque potentiel sur l'intégrité de la machine, et des chutes des performances de la turbine telles que, par exemple, des pertes de débit ou des générations de vortex, le becquet aval du rotor de turbine et la partie amont de la plateforme interne, pour chaque étage, se recouvrent axialement en partie. Une bonne étanchéité est ainsi assurée lorsque le jeu entre le becquet aval du rotor de turbine et la partie amont de la plate-forme interne, appelé jeu de recouvrement, est inférieur à zéro en fonctionnement de la turbine.

Une autre problématique se pose lorsque la turbine entre en survitesse. La problématique de survitesse survient lorsque l'on considère, par exemple, une rupture de l'arbre de turbine basse pression en cours de fonctionnement. Ceci engendre une augmentation importante de la vitesse de rotation de la turbine appelée survitesse. Pour stopper ce disfonctionnement qui peut avoir des conséquences graves sur l'intégrité de la turbine et donc de l'aéronef, on veut casser un maximum d'aubes de roues mobiles sur les aubes de distributeurs en se basant sur le fait que l'ensemble rotor va reculer par rapport au stator (comprenant l'ensemble des distributeurs) sous l'effet des efforts aérodynamiques, engendrant un contact entre les aubes fixes de distributeurs du stator et les aubes mobiles du rotor.

On distingue les jeux de survitesse endommageants, situés entre le bord de fuite des aubes mobiles du rotor et le bord d'attaque de distributeur au niveau supérieur de ou en milieu de la veine de flux, des jeux de survitesse non endommageants, situés entre le bord de fuite des aubes mobiles du rotor et le bord d'attaque du distributeur au niveau inférieur de la veine de flux.

Pour maîtriser au mieux la survitesse et donc préserver l'intégrité de la turbine, il faut que les jeux de survitesse endommageants soient comblés en premier, i.e. deviennent nuls avant les jeux de survitesse non endommageants. Cet état de fait impose d'augmenter les jeux de survitesse non endommageants pour assurer cette hiérarchie.

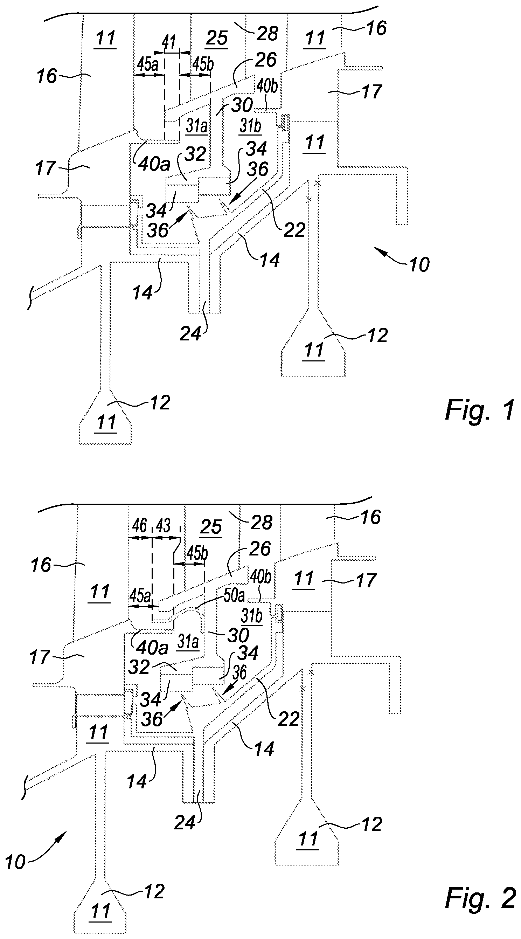

Comme illustré par la figure 1 et décrit ci-après en référence à ladite figure 1, on aboutit à la contradiction suivante : une augmentation des jeux non endommageants de survitesse de veine inférieure implique une diminution du jeu de recouvrement et vice-versa. EP-A2-1 895 108 montre les caractéristiques techniques du préambule de la revendication indépendante 1.

L'invention a pour objet de résoudre au moins une partie de ces inconvénients et concerne un dispositif d'étanchéité pour un distributeur de turbine de turbomachine défini dans la revendication indépendante 1.

Le jeu axial entre la tôle d'étanchéité et le rotor de turbine est ainsi inférieur au jeu axial entre la plate-forme interne et le rotor de turbine de manière à ce que l'énergie déployée, lors du recul du rotor de turbine en survitesse, écrase la tôle dite « fusible » en cas de contact. Ceci permet à la tôle d'être impactée avant la plate-forme interne en cas de survitesse associée à une rupture de l'arbre de turbine, et de conserver la hiérarchie entre les jeux endommageants et les jeux non endommageants situés entre la plateforme interne et le rotor de turbine, plus ouvert.

Par ailleurs, le dispositif selon l'invention permet d'augmenter le recouvrement du becquet aval, grâce à la tôle, ce qui améliore l'étanchéité, tout en évitant de réduire les jeux de survitesse, rendant ainsi possible une réduction de l'encombrement axial (i.e. de la longueur) de la turbine et donc de la masse de la turbine. Ceci permet en outre de limiter les tourbillons et l'échauffement des pièces environnantes et donc les dégradations de performance de la turbine.

De préférence, le jeu de recouvrement du becquet aval par la tôle d'étanchéité est supérieur ou égal au jeu de recouvrement du becquet aval par la plate-forme interne. Le jeu de recouvrement et les jeux de survitesse sont ainsi découplés, ce qui permet leur optimisation. Ceci assure en outre un meilleur recouvrement, ce qui impacte directement sur les performances de la machine et sur la durée de vie des pièces environnantes.

Avantageusement, la tôle d'étanchéité est configurée de sorte qu'elle comprend au moins une cambrure de manière à contrôler l'écrasement de la tôle en cas de contact avec le rotor de turbine. Ceci permet donc à la tôle d'étanchéité d'être écrasée, de manière contrôlée et anticipée, par le rotor de la turbine en cas de rupture de l'arbre de turbine. En outre, cette cambrure permet de faciliter le flambement de la tôle d'étanchéité.

La tôle d'étanchéité est, avantageusement, fixée au distributeur en au moins un point.

Selon une autre caractéristique de l'invention, la tôle d'étanchéité s'étend sous la partie inférieure du becquet amont. Ceci permet de créer une chicane supplémentaire dans la cavité amont entre la paroi radiale de distributeur et le rotor de turbine, limitant davantage les tourbillons.

Selon une autre caractéristique de l'invention, la tôle d'étanchéité est fixée par brasage à la paroi radiale ou à la plateforme interne. Ainsi, ce brasage, très localisé, sera vite rompu en cas de survitesse.

Avantageusement, la tôle d'étanchéité comprend un élément annulaire ou une pluralité d'éléments sectorisés. Ceci permet d'assurer la tenue mécanique du dispositif dans le temps étant donné que celui-ci sera soumis aux mêmes déformations que celles de la plate-forme interne. Ceci permet de plus de renforcer l'étanchéité.

Selon une caractéristique de l'invention, l'élément annulaire comprend en outre des fentes réparties sur toute ou partie de la circonférence dudit élément annulaire et des perçages à l'extrémité des fentes de manière à éviter la propagation des fentes en fonctionnement de la turbine.

Alternativement, les d'éléments sectorisés peuvent être liés deux par deux par une tôle intersecteur ou par recouvrement le long d'une ligne de sectorisation.

Le dispositif selon l'invention peut comprendre de plus un élément de coupure disposé substantiellement perpendiculairement au becquet amont et agencé pour réduire la surface de passage d'un flux d'air sous la partie inférieure du becquet amont. Les tourbillons sont ainsi réduits et l'étanchéité augmentée.

L'invention concerne aussi une turbine de turbomachine comprenant au moins un distributeur de turbine et au moins un rotor de turbine, ledit distributeur de turbine comprenant au moins une plate-forme annulaire interne, ledit rotor de turbine comprenant au moins un becquet aval disposé substantiellement axialement, ladite turbine comprenant un dispositif tel que défini ci-dessus.

D'autres caractéristiques et avantages de l'invention apparaîtront lors de la description qui suit faite en regard des figures annexées données à titre d'exemples non limitatifs (des références identiques étant données à des objets semblables) et dans lesquelles :
- la figure 1 représente une vue en coupe axiale d'un premier rotor selon l'art antérieur ;
- la figure 2 représente une vue en coupe axiale d'un rotor comprenant une première forme de réalisation du dispositif selon l'invention ;
- la figure 3 représente une vue en coupe axiale d'un rotor comprenant une seconde forme de réalisation du dispositif selon l'invention;
- la figure 4 représente une vue en coupe axiale d'un rotor comprenant une troisième forme de réalisation du dispositif selon l'invention ;
- la figure 5 représente une vue en coupe axiale d'un rotor comprenant une quatrième forme de réalisation du dispositif selon l'invention ;
- la figure 6a représente une vue en coupe axiale d'un rotor comprenant une cinquième forme de réalisation du dispositif selon l'invention ;
- la figure 6b représente une vue en coupe axiale d'un rotor comprenant une sixième forme de réalisation du dispositif selon l'invention ;
- la figure 6c représente une vue en coupe axiale d'un rotor comprenant une septième forme de réalisation du dispositif selon l'invention ;
- la figure 7 représente une vue de dessus d'un dispositif selon l'invention comprenant des fentes et des trous ;
- la figure 8 représente une vue de dessus une vue de dessus d'un dispositif selon l'invention dont des tôles d'étanchéité sont sectorisées ; et,
- la figure 9 représente une vue de dessus une vue de dessus d'un dispositif selon l'invention dont des tôles d'étanchéité sectorisées se recouvrent.

La présente invention est décrite en référence à une turbine de turbomachine d'un aéronef mais s'applique à tout type de turbine d'un moteur à gaz fonctionnant de manière identique ou similaire.

On se réfère d'abord à la figure 1 qui est une demi-vue schématique en coupe d'une turbine 10 basse-pression de turbomachine, selon un plan passant par l'axe de rotation (non représenté) du rotor 11 de la turbine 10. Le rotor 11 de la turbine 10 comprend des disques 12 assemblés coaxialement les uns aux autres par des brides annulaires 14 et portant des rangées annulaires d'aubes mobiles 16 montées par des pieds d'aubes, par exemple en queue d'aronde ou analogue, à leurs extrémités radialement internes sur la périphérie externe des disques 12. Le rotor 11 est relié à un arbre de turbine par l'intermédiaire d'un cône d'entraînement (non représenté) fixé au moyen d'une bride annulaire (non représenté) entre les brides annulaires 14 des disques 12. Des flasques annulaires 22 de retenue axiale des aubes mobiles 16 sur les disques 12 sont en outre montées entre les disques 12 et comprennent chacun une paroi radiale 24 serrée axialement entre les brides annulaires 14 de deux disques adjacents 12. Entre les rangées d'aubes mobiles 16 se trouvent des distributeurs 25 qui comportent chacun deux plates-formes annulaires, respectivement interne 26 et externe (non représentées), reliées entre elles par une rangée annulaire de pales fixes 28. Les plates-formes externes des distributeurs 25 sont accrochées par des moyens appropriés sur un carter (non représenté) de la turbine 10 basse-pression. Les plates-formes internes 26 des distributeurs 25 comprennent chacune une paroi radiale 30 qui s'étend radialement vers l'intérieur depuis une surface interne de la plate-forme 26 et qui est reliée à sa périphérie interne à une couronne cylindrique de support 32 d'éléments annulaires 34 en matériau abradable. Les régions définies entre la paroi interne 26, la paroi radiale 30 et la couronne annulaire 32 forment ainsi deux cavités 31a et 31b.

Ces éléments abradables 34 sont agencés radialement à l'extérieur et en regard de léchettes annulaires externes 36 portées par les flasques 22. Les léchettes 36 sont destinées à coopérer par frottement avec les éléments abradables 34 de façon à former des joints à labyrinthe dont le plan de joint est parallèle à l'axe de rotation 13 du rotor de turbine 11 et à limiter ainsi le passage d'air en direction axiale à travers ces joints.

La couronne cylindrique 32 comprend en amont et en aval des rebords annulaires qui s'étendent sensiblement axialement du côté opposé à la paroi radiale 30 de la plate-forme interne 26 du distributeur 25. La couronne 32 et la paroi radiale 30 de chaque distributeur 25 peuvent être formées d'une seule pièce de fonderie avec la plate-forme interne 26 de ce distributeur 25.

Des becquets aval 40a et aval 40b sensiblement cylindriques sont formés en saillie axiale sur les pieds 17 des aubes mobiles 16, s'étendant dans les cavités 31a et 31b et coopérant ainsi par effet de chicane avec ces rebords annulaires et avec les bords amont et aval des plates-formes internes 26 pour limiter le passage de gaz chauds depuis la veine de la turbine 10 radialement vers l'intérieur au niveau des joints à labyrinthe.

La figure 1 illustre un jeu de recouvrement 41 formé par le recouvrement de la plate forme interne 26 du distributeur 25 sur le becquet aval 40a du rotor de turbine 11. La figure 1 illustre aussi les jeux de survitesse 45a et 45b respectivement entre l'extrémité amont de la plate-forme interne 26 du distributeur 25 et le rotor 11 de turbine 10 et entre l'extrémité du becquet aval 40a du rotor 11 de turbine 10 et la paroi radiale 30 du distributeur 25. On aboutit ainsi à la contradiction suivante : une augmentation des jeux non endommageants de survitesse 45a et 45b implique une diminution du jeu de recouvrement 41 et vice-versa.

Les figures 2 à 6 illustrent plusieurs formes de réalisation du dispositif d'étanchéité selon l'invention comprenant un ou plusieurs tôle(s) 50a et/ou 50b. Par tôle on entend une plaque en matériau telle qu'un métal ou tout matériau que l'homme du métier pourrait adapter pour l'utiliser aux fins de la présente invention tel que, par exemple, un matériau composite, du plastique etc...

Le jeu de recouvrement 43 est ainsi augmenté sans diminuer pour autant les jeux de survitesse 45a et 45b. Le jeu de recouvrement 43 et les jeux de survitesse 45a et 45b sont ainsi découplés et il ne reste alors plus qu'une condition de non contact à établir, c'est-à-dire paramétrer les jeux de survitesse 45a et 45b indépendamment du jeu de recouvrement 43, pour s'assurer que les jeux non endommageants de survitesse 45a et 45b ne seront pas comblés avant les jeux endommageants.

En cas de survitesse, pour assurer le contact du rotor 11 de turbine 10 avec la tôle d'étanchéité 50a et/ou 50b avant le contact avec la plate-forme interne 26, on doit s'assurer que le jeu 46 entre la tôle d'étanchéité 50a et/ou 50b est inférieur au jeu de survitesse 45a. Ce qui implique que le jeu de recouvrement 43 doit être supérieur au jeu de recouvrement 41.

La différence entre le jeu de recouvrement 43 et le jeu de recouvrement 41 résulte de la mise en place du jeu 46 qui est dimensionné en non-contact (par exemple, environ 1mm minimum en fonctionnement), en lieu et place du jeu 45a, lui même dimensionné en survitesse (par exemple, environ 7mm). La différence de recouvrement correspond à la différence entre le jeu 45a et le jeu 46.

Le dispositif d'étanchéité selon l'invention illustré par la figure 2 comprend une tôle d'étanchéité 50a, par exemple métallique, monté sur la face amont de la paroi radiale 30 de distributeur 25, s'étendant entre la plate-forme interne 26 du distributeur 25 et le becquet amont 40a et agencé pour former un jeu de recouvrement 43 avec le becquet aval 40a (en d'autres termes, agencé pour recouvrir partiellement axialement le becquet aval 40a). Un tel jeu de recouvrement 43 formé par le dispositif d'étanchéité selon l'invention est égal ou supérieur au jeu de recouvrement 41 formé par la plate-forme interne 26 du distributeur 25 et le becquet aval 40a, ce qui améliore l'étanchéité tout en évitant l'augmentation des jeux de survitesse.

Afin d'éviter que le dispositif d'étanchéité ne représente un jeu de survitesse non endommageant, la tôle d'étanchéité 50a peut être par exemple une tôle précambrée pour qu'en cas de rupture d'arbre de turbine, elle perde une partie de sa rigidité axiale afin qu'elle soit écrasée par les aubes mobiles de rotor de manière voulue et anticipée, faisant ainsi office « d'élément fusible ».

De plus, l'ajout d'une telle tôle implique la réduction de la cavité 31a sous la plateforme interne 26 du distributeur 25, ce qui, comme le recouvrement, limite l'échauffement des pièces environnantes et les dégradations de performance.

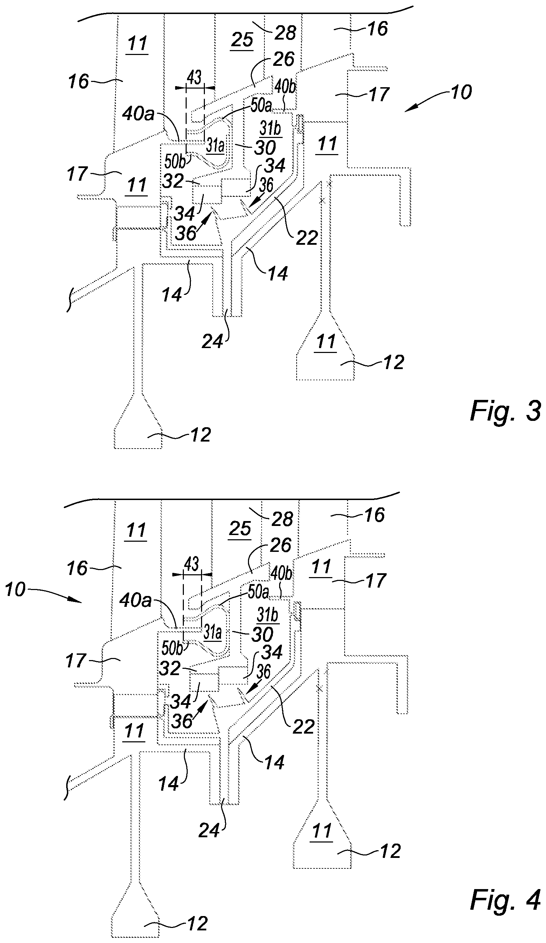

Le dispositif d'étanchéité peut comprendre une tôle d'étanchéité 50a et une tôle d'étanchéité 50b comme illustré par les figures 3 et 4. Ces deux tôles d'étanchéité 50a et 50b pouvant par exemple être monté « en U » afin de conférer un meilleur recouvrement par cet ajout de chicane supplémentaire, ce qui a pour effet de mieux fermer la cavité 31a et donc de limiter les tourbillons d'air.

On notera que les longueurs de recouvrement du becquet aval 40a par les tôles d'étanchéité 50a et 50b peuvent être égales ou différentes.

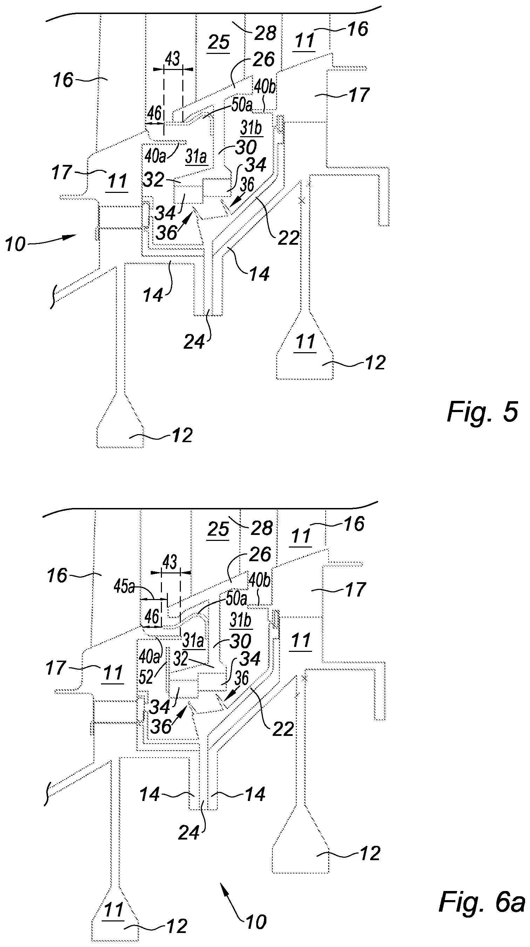

Dans le dispositif d'étanchéité illustré par la figure 5, la tôle 50a est fixée, par exemple par un point de brasure, à la surface interne de la plate-forme interne 26 en plus d'être fixée à la paroi radiale 30. Ces deux points de fixations ont pour effet de réduire voire de supprimer les vibrations qui pourraient être induites par le dispositif d'étanchéité selon l'invention.

Dans le dispositif d'étanchéité illustré par la figure 6a, la tôle 50a est identique à celle de la figure 2 et un élément de coupure 52 permet de fermer davantage la cavité 31a afin de renforcer l'étanchéité et de réduire ainsi les tourbillons d'air dans la cavité 31a. Cette amélioration permet de réduire l'échauffement du rotor.

Dans les formes de réalisation du dispositif selon l'invention illustré par les figures 2 à 6a, les tôles d'étanchéité 50a et 50b peuvent être montées sur la paroi radiale 30 par exemple par brasage.

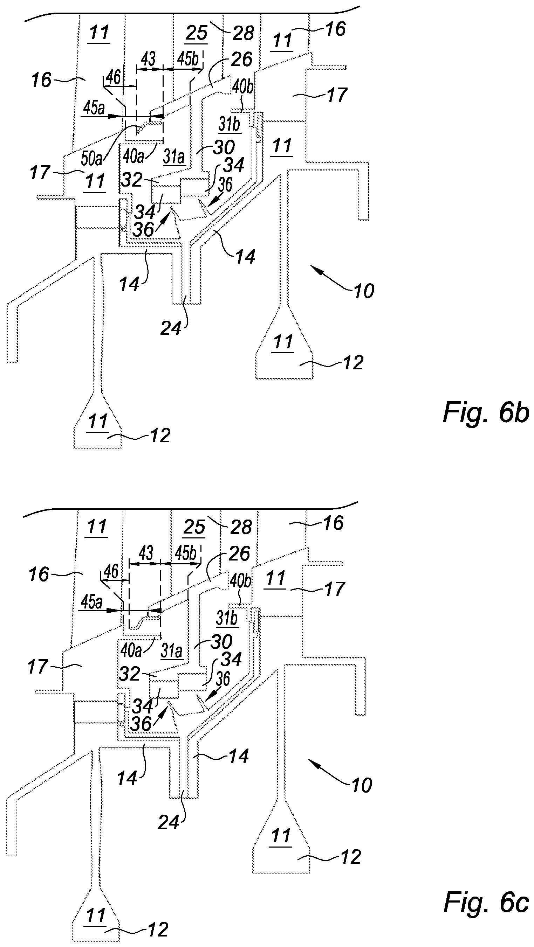

Les figures 6b et 6c illustrent chacune un dispositif selon l'invention monté sur la plateforme interne 26 du distributeur 25. Ces deux solutions sont très adaptées pour les veines de flux à fortes conicités car on évite ainsi de voir l'extrémité de la tôle remonter dans la veine sous l'effet des efforts aérodynamiques. Ces solutions permettent également de contourner d'éventuels problèmes vibratoires car on compacte la taille de la tôle et, par exemple, en venant la braser radialement sous la plateforme inférieure du distributeur, on supprime tout battement radial. Ces solutions permettent aussi d'obtenir un jeu radial minimal, et donc une section de fuite minimale, sans avoir à modifier la position radiale des distributeurs 25 et des aubes mobiles 16. Comme pour les autres formes de réalisation du dispositif selon l'invention, la tôle peut aussi être préflambée pour faciliter et contrôler son écrasement.

On notera que le dispositif d'étanchéité selon l'invention peut être monté sur un, plusieurs ou tous les étages de la turbine.

Le dispositif d'étanchéité peut être installé sur toute ou partie de la circonférence d'un ou de plusieurs étages de la turbine.

La tôle d'étanchéité 50a et/ou 50b peut être formée d'un seul élément annulaire (à 360°) ou d'une pluralité d'éléments sectorisés.

La raideur axiale d'une ou plusieurs tôles d'étanchéité 50a et 50b peut être dégradée volontairement pour plier plus facilement en cas de contact avec le rotor lorsque, par exemple, l'arbre de turbine casse. Pour se faire, une ou plusieurs tôles d'étanchéité 50a et 50b peuvent être par exemple soit sectorisées, soit fendues.

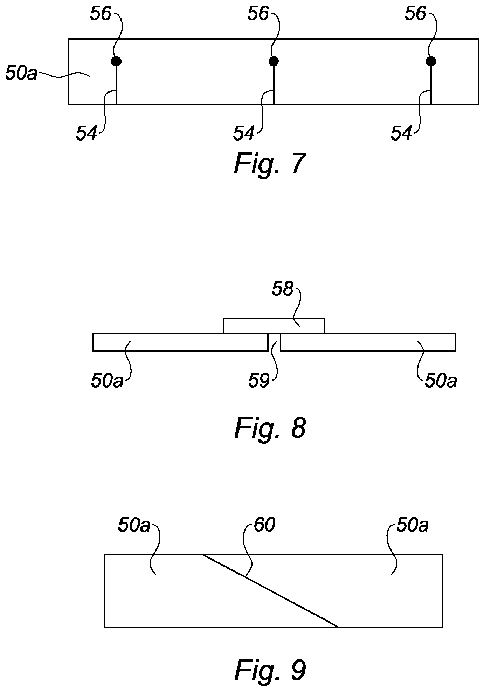

La figure 7 illustre une tôle d'étanchéité, par exemple 50a, dont une portion est fendue circonférentiellement en divers endroits ou fentes 54. Des trous ou perçages 56 réduisent davantage la raideur ou rigidité de la tôle d'étanchéité 50a. Les perçages 56 évitent en outre de propager les fentes 54 en fonctionnement de la turbine. Ce sont aussi des repères pour l'usinage des fentes 54.

La figure 8 illustre une tôle d'étanchéité, par exemple 50a, comprenant des éléments sectorisés, c'est-à-dire séparés par des secteurs 59. Un élément de recouvrement ou tôle intersecteur 58, par exemple brasé sur un ou les deux secteurs de tôle 50a, permet de renforcer l'étanchéité en comblant le secteur 59.

La sectorisation des tôles d'étanchéité, par exemple 50a, du dispositif d'étanchéité selon l'invention permet notamment d'assurer la tenue mécanique du dispositif dans le temps étant donné que celui-ci sera soumis aux mêmes déformations que celles de la plateforme interne 26.

Dans la sectorisation de tôles d'étanchéité, par exemple 50a, illustrée par la figure 9, deux tôles 50a se recouvrent le long d'une ligne transversale 60 de sectorisation, par exemple, les deux secteurs de tôle 50a peuvent être usinés en biseau 60. Dans ce cas, c'est la forme des deux secteurs de tôle 50a qui permet d'assurer l'étanchéité sans avoir à ajouter un élément supplémentaire de recouvrement.

## Revendications

1. Dispositif d'étanchéité pour un distributeur (25) de turbine (10) de turbomachine comprenant un rotor (11) de turbine (10), ledit distributeur (25) de turbine (10) comprenant au moins une plate-forme annulaire interne (26), ledit rotor (11) de turbine (10) comprenant un becquet aval (40a) disposé substantiellement axialement, ledit dispositif d'étanchéité comprenant au moins une tôle d'étanchéité (50a, 50b) disposée, radialement, entre la plate-forme interne (26) et le becquet aval (40a) du rotor (11) de la turbine (10), dispositif **caractérisé en ce que** la tôle d'étanchéité (50a, 50b) est une tôle précambrée, et **en ce que** le jeu axial (45'a) entre la tôle d'étanchéité (50a, 50b) et le rotor (11) de turbine (10) est inférieur au jeu axial (45a) entre la plate-forme interne (26) et le rotor (11) de turbine (10) de manière à ce que la tôle d'étanchéité (50a, 50b) perde une partie de sa rigidité axiale et soit écrasée par le rotor de turbine en cas de contact.

2. Dispositif d'étanchéité selon la revendication 1, dans lequel la tôle d'étanchéité (50a, 50b) forme avec le becquet aval (40a) du rotor (11) un jeu de recouvrement (43), ledit jeu de recouvrement (43) du becquet aval (40a) par la tôle d'étanchéité (50a) étant supérieur ou égal au jeu de recouvrement (41) du becquet aval (40a) par la plate-forme interne (26).

3. Dispositif d'étanchéité selon l'une quelconque des revendications précédentes, dans lequel la tôle d'étanchéité (50a) est fixée au distributeur (25) en au moins un point.

4. Dispositif d'étanchéité selon l'une quelconque des revendications précédentes, dans lequel la tôle d'étanchéité (50b) s'étend sous la partie inférieure du becquet aval (40a).

5. Dispositif d'étanchéité selon l'une quelconque des revendications précédentes, ledit dispositif comprenant de plus un élément de coupure (52) disposé substantiellement perpendiculairement au becquet aval (40a) et agencé pour réduire la surface de passage d'un flux d'air sous la partie inférieure du becquet aval (40a).

6. Dispositif d'étanchéité selon l'une quelconque des revendications précédentes, dans lequel la tôle d'étanchéité (50a, 50b) comprend un élément annulaire (50a, 50b) ou une pluralité d'éléments sectorisés (50a, 50b).

7. Dispositif d'étanchéité selon la revendication 6, dans lequel l'élément annulaire (50a, 50b) comprend en outre des fentes (54) réparties sur la circonférence dudit élément annulaire (50a, 50b) et des perçages (56) à l'extrémité des fentes (54) de manière à éviter la propagation des fentes (54) en fonctionnement de la turbine (10).

8. Dispositif d'étanchéité selon la revendication 7, dans lequel les d'éléments sectorisés (50a, 50b) sont liés deux par deux par une tôle intersecteurs (58) ou par recouvrement le long d'une ligne de sectorisation (60).

9. Turbine (10) de turbomachine comprenant au moins un distributeur (25) de turbine (10) et au moins un rotor (11) de turbine (10), ledit distributeur (25) de turbine (10) comprenant au moins une plate-forme annulaire interne (26), ledit rotor (11) de turbine (10) comprenant au moins un becquet aval (40a) disposé substantiellement axialement, ladite turbine comprenant un dispositif selon l'une quelconque des revendications 1 à 8.

## Patentansprüche

1. Dichteinrichtung für einen Verteiler (25) einer Turbine (10) einer Turbomaschine, umfassend einen Rotor (11) einer Turbine (10), wobei der Verteiler (25) einer Turbine (10) mindestens eine innere ringförmige Plattform (26) umfasst, wobei der Rotor (11) einer Turbine (10) einen stromabwärtigen Spoiler (40a) umfasst, der im Wesentlichen axial angeordnet ist, wobei die Dichteinrichtung mindestens ein Dichtblech (50a, 50b) umfasst, das radial zwischen der inneren Plattform (26) und dem stromabwärtigen Spoiler (40a) des Rotors (11) der Turbine (10) angeordnet ist, wobei die Vorrichtung **dadurch gekennzeichnet ist, dass** das Dichtblech (50a, 50b) ein vorgebogenes Blech ist, und dadurch, dass das axiale Spiel (45'a) zwischen dem Dichtblech (50a, 50b) und dem Rotor (11) einer Turbine (10) kleiner ist als das axiale Spiel (45a) zwischen der inneren Plattform (26) und dem Rotor (11) einer Turbine (10), sodass das Dichtblech (50a, 50b) im Falle eines Kontakts einen Teil seiner axialen Steifheit verliert und durch den Rotor einer Turbine zusammengedrückt wird.

2. Dichteinrichtung nach Anspruch 1, wobei das Dichtblech (50a, 50b) mit dem stromabwärtigen Spoiler (40a) des Rotors (11) ein Überlappungsspiel (43) bildet, wobei das Überlappungsspiel (43) des stromabwärtigen Spoilers (40a) durch das Dichtblech (50a) größer oder gleich dem Überlappungsspiel (41) des stromabwärtigen Spoilers (40a) durch die innere Plattform (26) ist.

3. Dichteinrichtung nach einem der vorstehenden Ansprüche, wobei das Dichtblech (50a) an mindestens einem Punkt am Verteiler (25) befestigt ist.

4. Dichteinrichtung nach einem der vorstehenden Ansprüche, wobei sich das Dichtblech (50b) unter dem unteren Teil des stromabwärtigen Spoilers (40a) erstreckt.

5. Dichteinrichtung nach einem der vorstehenden Ansprüche, wobei die Vorrichtung zusätzlich ein Schnittelement (52) umfasst, das im Wesentlichen senkrecht zum stromabwärtigen Spoiler (40a) angeordnet und eingerichtet ist, um die Durchgangsoberfläche eines Luftstroms unter dem unteren Teil des stromabwärtigen Spoilers (40a) zu reduzieren.

6. Dichteinrichtung nach einem der vorstehenden Ansprüche, wobei das Dichtblech (50a, 50b) ein ringförmiges Element (50a, 50b) oder eine Vielzahl sektorisierter Elemente (50a, 50b) umfasst.

7. Dichteinrichtung nach Anspruch 6, wobei das ringförmige Element (50a, 50b) weiter über den Umfang des ringförmigen Elements (50a, 50b) verteilte Spalte (54) und Bohrungen (56) am Ende der Spalte (54) umfasst, um die Ausbreitung der Spalte (54) bei Betrieb der Turbine (10) zu vermeiden.

8. Dichteinrichtung nach Anspruch 7, wobei die sektorisierten Elemente (50a, 50b) paarweise durch ein sektorübergreifendes Blech (58) oder durch Überlappung entlang einer Sektorisierungslinie (60) verbunden sind.

9. Turbine (10) einer Turbomaschine, umfassend mindestens einen Verteiler (25) einer Turbine (10) und mindestens einen Rotor (11) einer Turbine (10), wobei der Verteiler (25) einer Turbine (10) mindestens eine innere ringförmige Plattform (26) umfasst, wobei der Rotor (11) einer Turbine (10) mindestens einen stromabwärtigen Spoiler (40a) umfasst, der im Wesentlichen axial angeordnet ist, wobei die Turbine eine Einrichtung nach einem der Ansprüche 1 bis 8 umfasst.

## Claims

1. Sealing device for a nozzle (25) of a turbomachine turbine (10) comprising a turbine (10) rotor (11), said turbine (10) nozzle (25) comprising at least one inner annular platform (26), said turbine (10) rotor (11) comprising a downstream spoiler (40a) disposed substantially axially, said sealing device comprising at least one sealing sheet (50a, 50b) disposed, radially, between the inner platform (26) and the downstream spoiler (40a) of the rotor (11) of the turbine (10), the device being **characterised in that** the sealing sheet (50a, 50b) is a pre-cambered sheet, and **in that** the axial clearance (45'a) between the sealing sheet (50a, 50b) and the turbine (10) rotor (11) is less than the axial clearance (45a) between the inner platform (26) and the turbine (10) rotor (11), such that the sealing sheet (50a, 50b) loses some of its axial rigidity and is crushed by the turbine rotor in the event of contact.

2. Sealing device according to claim 1, wherein the sealing sheet (50a, 50b) forms, with the downstream spoiler (40a) of the rotor (11), an overlap clearance (43), said overlap clearance (43) of the downstream spoiler (40a) by the sealing sheet (50a) being greater than or equal to the overlap clearance (41) of the downstream spoiler (40a) by the inner platform (26).

3. Sealing device according to any of the preceding claims, wherein the sealing sheet (50a) is fixed to the nozzle (25) in at least one point.

4. Sealing device according to any of the preceding claims, wherein the sealing sheet (50b) extends below the lower portion of the downstream spoiler (40a).

5. Sealing device according to any of the preceding claims, wherein said device further comprises a cut-off element (52) disposed substantially perpendicular to the downstream spoiler (40a) and arranged to reduce the air flow path surface under the lower portion of the downstream spoiler (40a).

6. Sealing device according to any of the preceding claims, wherein the sealing sheet (50a, 50b) comprises an annular element (50a, 50b) or a plurality of sectorised elements (50a, 50b).

7. Sealing device according to claim 6, wherein the annular element (50a, 50b) further comprises slots (54) distributed over the circumference of said annular element (50a, 50b) and perforations (56) at the end of the slots (54) so as to prevent propagation of the slots (54) during operation of the turbine (10).

8. Sealing device according to claim 7, wherein the sectorised elements (50a, 50b) are connected in pairs by an intersector sheet (58) or by overlap along a sectorisation line (60).

9. Turbomachine turbine (10) comprising at least one turbine (10) nozzle (25) and at least one turbine (10) rotor (11), said turbine (10) nozzle (25) comprising at least one inner annular platform (26), said turbine (10) rotor (11) comprising at least one downstream spoiler (40a) disposed substantially axially, said turbine comprising a device according to any of claims 1 to 8.
